# EUROPEAN PATENT SPECIFICATION

(11) **EP 1 401 928 B1**
(45) Date of publication and mention of the grant of the patent: **07.05.2008**
(21) Application number: 02735355.6
(22) Date of filing: 14.05.2002
(51) Int. Cl.: C08J 7/04, C09D 167/06, C09D 4/06, C08J 5/00, C08J 5/18

(54) **STRUCTURALLY MODIFIABLE FLEXIBLE FILM**
STRUKTURELL VERÄNDERBARER BIEGSAMER FILM
FEUILLE FLEXIBLE A STRUCTURE MODIFIABLE PERMETTANT LA FORMATION D'ARTICLES STABLES EN DIMENSION ET EN STRUCTURE, EN PARTICULIER DE RECEPTACLES JETABLES

(30) Priority: 18.05.2001 IT VE20010026
(43) Date of publication of application: 31.03.2004
(73) Proprietor: Trani, Giorgio, 30100 Venezia (IT)
(72) Inventor: TRANI, Giorgio, I-30100 Venezia (IT); STERNER, Marion, I-30123 Venezia (IT); MENEGAZZO, Elena, I-35100 Padova (IT)
(74) Representative: Piovesana, Paolo
(86) International application number: PCT/EP2002/005269
(87) International publication number: WO 2002/094915

(56) References cited:
- EP-A- 0 716 196
- DE-A- 19 757 090
- US-A- 3 648 834
- US-A- 4 425 287

## Description

This invention relates to a structurally modifiable flexible film for forming dimensionally and structurally stable articles, in particular disposable containers.

Disposable containers are known obtained from sheets of strong, generally plastic-coated paper, which are unwound from reels and subjected to successive bonding, folding and possibly shaping processes to assume the desired spatial configuration. Their filling with liquid, granular or powdery products can take place either during the container formation or after it has been completely formed.

These known disposable containers are advantageous in terms of their stability, stackability, display on shelves, strength, product protection, ease of preservation, use and facility for reclosure. They are however rather heavy and costly, and difficult to dispose of as they are not easy to crumple. Flexible disposable containers are also known, obtained from plastic film, for example polyethylene, which are essentially free of the drawbacks of rigid containers; in particular they are of low cost, of smaller bulk and easy disposal, and simple, practical and advantageous to machine-fabricate starting from reels. However they have practically no dimensional stability and are therefore not easy to stack, and moreover from the commercial viewpoint present limitations in that they are unsuitable for display on shelves.

EP-0716 196 describes a layered material comprising a central layer made of fabric impregnated by photoplymerizable resins.

DE 19757090 descibes a strengthening fibrous material useful for paper or cardboard for packaging.

US 3648834 describes a method of making rigid packages from flexible films.

US 4425287 relates to the production of moldings from unsaturated polyester resins.

WO-01110635 relates to a filmable material with characteristics selectively modifiable by administration of particular types of energy.

WO-9847766 describes a method for obtaining dimensionally and structurally stable objects, in particular disposable containers

This last method has proved extremely valid, and in particular has enabled articles and especially disposable containers to be formed from a flexible film which prior to the formation of the article can be wound on a reel and can hence occupy a considerably reduced space, to be then stiffened only at the moment of formation of the article.

The present invention proposes to provide a structurally modifiable film, to be used in particular in the aforeindicated known method, as an alternative to the flexible film used therein.

The structurally modifiable flexible film according to the invention is characterised by comprising at least one flexible layer associated over at least a part of its area with a stiffening system consisting of at least one substance which is originally liquid but is subsequently thickened and further stiffened by administration of energy.

Some preferred embodiments of the invention are further clarified hereinafter by way of non-limiting example.

In a first embodiment, the structurally modifiable flexible film is a film 2 formed from several layers joined together by a traditional process of bonding by rolling or extrusion. One of these layers is formed from a traditional flexible film, for example of polyethylene, polypropylene, polyester, aluminium, paper or the like. Another of these layers is formed from a filmable substance able to undergo two different structural transformations, the first of which (stage A) takes place either spontaneously or by administration of energy, for example heat, during the film bonding process and transforms the substance into a state which enables the multi-layer film to be worked, the second transformation being effected later on command (stage B) by administrating a particular type of energy. Specifically, the administered energy can be light (with its spectrum for example in the UV range), ultrasound, electron beam, thermal (with a triggering temperature higher than for the first stage), etc.
The transformable substance can involve the whole or part of the surface of the traditional flexible film; in the first case it can be applied by spreading or by spraying, or can form a film to be bonded to the traditional flexible film; in the second case the transformable substance can be applied by stamping. In all cases the multi-layer film 2 is flexible and can be worked, wound onto a reel and stored, in a similar manner to a traditional flexible film.
The transformable substance can advantageously be a mixture of several polymers, for example a system formed from photo-crosslinkable unsaturated polyester resins and one or more thickening agents, or from an unsaturated epoxy resin and an anhydride, or from unsaturated polyester and diisocyanate, or from a polyol and a diisocyanate, or from an epoxy resin, a diacrylate and a diisocyanate, or from a polyurethane adhesive and an acrylic system, or from a vinyl varnish and an acrylic system or the tike, in which in the first stage there is a polymerization reaction between the two different resins which can lead to the formation of a polymeric cross-linkage, or polymerization of molecules of the same resin can occur, or "thickening" can take place by coordination of several molecules about a coordination centre to hence ensure workability of the film, whereas in the second stage final stiffening takes place.
The transformable system is generally provided with components at least one of which has double bonds; the system could also be provided with an activator (photoinitiator, thermal activator, catalyst).

After the film 2 has been obtained, at the moment in which it is to be used for example to obtain a substantially rigid article or a container 4 it is subjected to energy administration of a type compatible with the nature of the transformable substance, so that it becomes transformed from flexible to substantially rigid.

The energy administration can take place at any moment and in any form, depending also on the article to be obtained, For example, if the article to be obtained consists of cladding for a body having its own form, for example cladding for a panel, after the flexible multi-layer film has been applied to the panel the energy must be administered to the entire surface of said panel.

If however the article to be clad consists of a pantographed panel or a convex body (for example the arm of an armchair), the multi-layer film should be of extendable type in order to adhere perfectly to the body without forming folds or overlaps, and again the energy must be administered to the entire surface of said panel.

Finally, if the article to be obtained consists of a container 4, for example of bag type, which has to be stiffened only at its corners, the transformable substance can be applied either only to those bands of the multi-layer film which are to form the container corners, or to the entire surface of the film. In the first case the energy can be administered to the entire surface of the film, whereas in the second case it must be applied with masking, i.e. it must involve only those bands which are to form the container corners.

In a different embodiment the structurally modifiable flexible film is a single-layer film in the form of a flexible film of at least partly porous material, for example paper or non-woven fabric, which is impregnated with the transformable substance. In this manner a composite material is obtained formed from a single layer in which the impregnant constitutes the matrix and the film the reinforcement filler; by a first transformation this material is brought into a condition in which it can be worked and handled, and by the second transformation, implemented on command, it becomes substantially rigid.

The substances used in this second embodiment are such as to ensure that the film is not sticky even when in its form preceding final stiffening, and can be for example urethane acrylates dispersed in water or dissolved in a solvent, unsaturated polyesters, acrylates with various terminations, or others.

In a variant of this embodiment, the single-layer transformable film can be bonded to traditional flexible films to form a multi-layer film, in which at least one layer has the property of undergoing two different transformations, the second of which enhances its mechanical properties.

In a third embodiment the substance which stiffens on command also has extrudability characteristics, and in this manner it can be extruded alone to form the structurally modifiable flexible film, or can be coextruded with a filmable polyolefin.

In this latter case the stiffening substance effects the first transformation during the extrusion stage, to be transformed into flexible film, whereas the second transformation, which determines stiffening, is triggered on command following administration of energy in the form required by the system.

In both the aforesaid cases in which the stiffening substance is of flexible type, it evidently involves the entire surface of the structurally modifiable film of the invention, and consequently if the transformation is to involve only defined regions of the film, energy administration must necessarily take place with masking.

A fourth embodiment of the structurally modifiable flexible film represents an intermediate solution between the aforegoing. According to this fourth embodiment, the flexible film is of multi-layer type, i.e. it is formed from several layers, one of which is a traditional flexible film to which the stiffening substance is applied, as described relative to the first embodiment, and at least one other layer of the multi-layer film consists of or contains stiffening material. Hence in this case the energy administration must take place over more than one layer and will enable the effect to be emphasised or selective, depending on whether the substances used are identical or different.

A fifth embodiment of the structurally modifiable flexible film consists of a traditional flexible film on which there is deposited a cross-linkable polymer which is in the solid state at ambient temperature and is diluted in a suitable solvent for its application. In this case the first transformation stage consists of evaporating the solvent, followed by possible bonding of the flexible film to a second film to obtain a workable and windable multi-layer film; final stiffening of the multi-layer film takes place by cross-linking the polymer with or without activator, as a result of energy administration (for example electron beam, or UV if a photoinitiator is present).

A sixth embodiment of the structurally modifiable flexible film uses as the stiffening substance to be applied to a traditional flexible film a mixture of two radical polymerization polymers, one of which is in the liquid state, other being in the solid state (physical thickening). In this case the polymer in the solid state, in particular in the powder state, becomes suspended in the polymer in the liquid state, the suspension having a consistency such as to enable it to be spread by traditional methods; the first transformation is thermal and results in solubilization of the solid polymer in the liquid polymer, creating a considerable viscosity increase in the system; the second transformation is the cross-linkage of at least one of the two polymers, resulting in final stiffening of the plastic film. The substances which can be used in this case are solid polyester and liquid polyester, at least one of them unsaturated, solid diacrylate and liquid diacrylate or crossed systems. This system could present the advantage of very rapid thickening without being too critical regarding the resin specifications.

A seventh embodiment of the structurally modifiable flexible film consists of applying to a traditional film a system formed from a two-component polyurethane adhesive and expandable microbeads. In this case the first structural transformation stage is the formation of the polyurethane adhesive followed by adhesion between the matrix, film and microbeads, whereas the second stage consists of expansion of the microbeads as a result of thermal energy administration. In its turn the volume increase consequent on the microbead expansion determines a stiffness increase in those parts of the film in which the microbeads are present.

In a variant of this embodiment the microbeads are incorporated into a system which cross-links following administration of equal or different types of energy, or into one of the two-stage stiffening systems already described. In this case the first transformation is the thickening of the system containing the microbeads, whereas the transformation for final stiffening comprises expansion of the microbeads and cross-linkage of the system which contains them, so improving the final result obtained.

An eighth embodiment of the structurally modifiable flexible film consists of inserting into a dual-cure organic resin a filler in the form of nanoparticles which form a "nanocomposite" resulting in increase in the elastic modulus of the resin and hence of the multi-layer film. In order for the nanoparticles to provide a significant contribution to the mechanical properties of the film they must be bonded to the resin, and to obtain a good bond between the filler and matrix the nanoparticles must be functionalized with organic groups compatible with the resin used so that chemical bonds form between the particles and the matrix. The particles used are preferably of inorganic nature and can be of natural origin, such as montmorillonite, or can originate from chemical synthesis (for example of alkoxysilanes), or can be formed from a hybrid; they could be coated with a polymer matrix in order to bond to the compatible part of the resin with which they form the nanocomposite.

A ninth embodiment of the structurally modifiable flexible film is based on the use of a hybrid system formed from an inorganic part and an organic part, possibly reinforced with nanoparticles. In this case there is the synergic effect of the combination of the organic part, ensuring film flexibility, with the inorganic part, determining significant increases in the elastic modulus. Finally the presence of nonoparticles enables a nanocomposite material to be formed which further increases film stiffness. In this case the nanoparticles used can be organic-inorganic hybrids to form bonds with the organic part of the matrix or with the inorganic part.

Independently of the method by which the structurally modifiable flexible film is obtained, it can be worked, wound on a reel and stored, and is usable in current packaging machines.

When all or part of the flexible film is to be stiffened, energy must be supplied in the form and intensity required by the system, in order to trigger the final transformation resulting in the stiffening of the scheduled parts of the film.

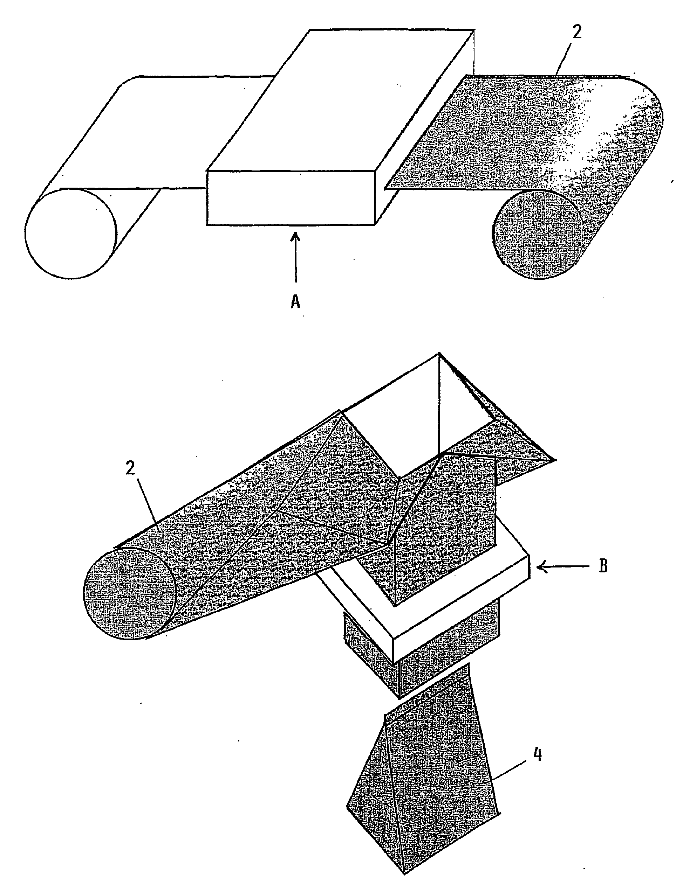

## Claims

1. A structurally modifiable flexible film **characterised by** comprising at least one flexible layer associated over at least a part of its surface with a stiffening system comprising at least a substance, which is liquid when applied to said flexible layer, but is subsequently thickened by a first transformation process, without the layer losing its features of flexibility and of being wound, and further is stiffened by administration of energy in a second transformation process.

2. A film as claimed in claim 1, **characterised in that** the substance associated with the flexible layer is at least partially transformable either spontaneously or by administration of energy, for example thermal.

3. A film as claimed in claim 1, **characterised in that** the flexible layer consists of at least one layer of substance included in the group comprising polyethylene, polypropylene, polyester, aluminium, paper.

4. A film as claimed in claim 1, **characterised in that** the transformable substance consists of a mixture of polymers.

5. A flexible film as claimed in claim 4, **characterised in that** the transformable substance consists of a mixture of unsaturated polyester resins.

6. A film as claimed in claim 5, **characterised in that** the transformable substance consists of a mixture of unsaturated resins with at least one thickening agent.

7. A film as claimed in claim 4, **characterised in that** the transformable substance consists of a mixture of epoxy resin, diacrylates, diisocyanates and photoinitiators.

## Patentansprüche

1. Strukturell veränderbarer biegsamer Film, **gekennzeichnet durch** das Umfassen mindestens einer biegsamen Schicht, die über wenigstens einen Teil ihrer Fläche mit einem versteifenden System verbunden ist, das mindestens eine Substanz umfasst, die flüssig ist, wenn sie auf die biegsame Schicht aufgetragen wird, aber anschließend **durch** einen ersten Umwandlungsvorgang verdickt wird, ohne dass die Schicht ihre Merkmale der Biegsamkeit und der Windungsfähigkeit verliert, und **durch** Zuführung von Energie in einem zweiten Umwandlungsvorgang weiter versteift wird.

2. Film nach Anspruch 1, **dadurch gekennzeichnet, dass** die mit der biegsamen Schicht verbundene Substanz zumindest teilweise umwandelbar ist, entweder auf spontane Weise oder durch Zuführung von Energie, beispielsweise thermischer.

3. Film nach Anspruch 1, **dadurch gekennzeichnet, dass** die biegsame Schicht aus mindestens einer Schicht einer Substanz besteht, die in der Gruppe enthalten ist, die Polyethylen, Polypropylen, Polyester, Aluminium und Papier umfasst.

4. Film nach Anspruch 1, **dadurch gekennzeichnet, dass** die umwandelbare Substanz aus einem Gemisch von Polymeren besteht.

5. Biegsamer Film nach Anspruch 4, **dadurch gekennzeichnet, dass** die umwandelbare Substanz aus einem Gemisch ungesättigter Polyesterharze besteht.

6. Film nach Anspruch 5, **dadurch gekennzeichnet, dass** die umwandelbare Substanz aus einem Gemisch ungesättigter Harze mit mindestens einem Verdickungsmittel besteht.

7. Film nach Anspruch 4, **dadurch gekennzeichnet, dass** die umwandelbare Substanz aus einem Gemisch aus Epoxidharz, Diacrylaten, Diisocyanaten und Photoinitiatoren besteht.

## Revendications

1. Film flexible à structure modifiable **caractérisé en ce qu'**il comprend au moins une couche flexible associée sur au moins une partie de sa surface à un système de raidissement comprenant au moins une substance qui est liquide lorsqu'elle est appliquée à ladite couche flexible, mais qui est épaissie ultérieurement par un premier processus de transformation, sans que la couche ne perde ses caractéristiques de flexibilité et ne soit enroulée, et est ensuite raidie par une administration d'énergie dans un deuxième processus de transformation.

2. Film comme revendiqué dans la revendication 1, **caractérisé en ce que** la substance associée à la couche flexible est au moins partiellement transformable spontanément ou par administration d'énergie, par exemple thermique.

3. Film comme revendiqué dans la revendication 1, **caractérisé en ce que** la couche flexible consiste en au moins une couche de substance incluse dans le groupe comprenant du polyéthylène, du polypropylène, du polyester, de l'aluminium et du papier.

4. Film comme revendiqué dans la revendication 1, **caractérisé en ce que** la substance transformable consiste en un mélange de polymères.

5. Film comme revendiqué dans la revendication 4, **caractérisé en ce que** la substance transformable consiste en un mélange de résines de polyesters non saturés.

6. Film comme revendiqué dans la revendication 5, **caractérisé en ce que** la substance transformable consiste en un mélange de résines non saturées avec au moins un agent d'épaississement.

7. Film comme revendiqué dans la revendication 4, **caractérisé en ce que** la substance transformable consiste en un mélange de résine époxy, de diacrylates, de diisocyanates et de photoinitiateurs.
